# EUROPÄISCHE PATENTANMELDUNG

(11) **EP 2 028 757 A2**
(43) Veröffentlichungstag der Anmeldung: **25.02.2009**
(21) Anmeldenummer: 08104895.1
(22) Anmeldetag: 28.07.2008
(51) Int. Cl.: H02M 7/5387

(54) **Verfahren und Einrichtung zur Ansteuerung eines Elektromotors**

(30) Priorität: 18.08.2007 DE 102007039147
(71) Anmelder: ZF-Lenksysteme GmbH, 73527 Schwäbisch Gmünd (DE)
(72) Erfinder: Weber, Markus, 73035, Göppingen (DE)

(57) **Zusammenfassung**

Es werden ein Verfahren zur Ansteuerung eines Elektromotors (12) mit mindestens einer Phase, eine Einrichtung (10) zur Durchführung des Verfahrens, ein Computerprogramm und ein Computerprogrammprodukt vorgestellt. Bei dem beschriebenen Verfahren ist vorgesehen, dass die mindestens eine Phase des Elektromotors (12) kommutiert mit unterschiedlichen Signalpegeln angesteuert wird, wobei zwischen den einzelnen Signalpegeln Zwischenschritte geschaltet werden.

## Beschreibung

Die Erfindung betrifft ein Verfahren zur Ansteuerung eines Elektromotors, eine Einrichtung zum Ansteuern eines Elektromotors sowie ein Computerprogramm und ein Computerprogrammprodukt zur Durchführung des Verfahrens.

Die Erfindung findet insbesondere Anwendung bei einem beispielsweise bürstenlosen Gleichstrommotor (BLDC-Motor). BLDC-Motoren sind Maschinen, die zum Beispiel in Servolenkungen bzw. dynamischen Steuerregelungen in Kraftfahrzeugen eingesetzt werden. Servolenkungen sind Einrichtungen zum Verstärken der Lenkkraft eines Fahrers, die dazu vorgesehen sind, die vom Fahrer aufgebrachte Lenkkraft zu verstärken, so dass das Fahrzeug mit einem geringeren Kraftaufwand gesteuert werden kann. Gleichstrommotoren haben eine sehr gute Dynamik und können einfach angesteuert werden. Die bürstenlose Ausführung ist verschleiß- und wartungsarm.

Die eingesetzten BLDC-Motoren sind typischerweise Maschinen mit einem Rotor und einem Stator, wobei üblicherweise im Rotor Permanentmagnete ein Erregerfeld bereitstellen. Im Stator ist mindestens eine Wicklung bzw. Phase vorgesehen, typischerweise zwei, drei oder vier Phasen, die bestromt wird bzw. werden.

Bei der Bestromung der mindestens einen Phase ist es notwendig, diese kommutiert anzusteuern, d.h. dass eine Kommutierung bzw. Stromwendung in festgelegten zeitlichen Abständen bzw. in Abhängigkeit der Statorlage wiederholt durchgeführt wird. Kommutierung bedeutet dabei ein Wechsel der Stromrichtung.

Sind mehrere Phasen vorgesehen, werden die Ansteuerungen dieser Phasen typischerweise gleichzeitig kommutiert, d.h. es wird eine sogenannte Blockkommutierung durchgeführt. Dabei werden die einzelnen Phasen abwechselnd mit unterschiedlichen Signalpegeln, nämlich mit einem pulsweitenmodulierten Signal bzw. einem PWM-Signal, einem hochohmigen TriState-Signal und einem statischen Low-Signal, angesteuert. Anstelle des PWM-Signals kann selbstverständlich auch ein Gleichsignal angelegt werden. Mit dem PWM-Signal kann jedoch im Vergleich zu dem Gleichsignal eine geringere Verlustleistung erreicht werden.

Bei der Blockkommutierung eines bürstenlosen Gleichstrommotors ergibt sich allerdings beim Umschalten des Felds der für die Blockkommutierung üblichen Ansteuerung ein akustischer Nachteil, insbesondere sind Störgeräusche (Ticken) zu hören, die für den Fahrer eines Kraftfahrzeugs stark beeinträchtigend sind.

Das erfindungsgemäße Verfahren dient zu Ansteuerung eines Elektromotors, bei dem mindestens eine Phase kommutiert mit unterschiedlichen Signalpegeln angesteuert wird, wobei bei der Ansteuerung zwischen den einzelnen Signalpegeln Zwischenschritte, denen Zwischensignalpegel zugeordnet sind, geschaltet bzw. vorgesehen werden.

Es zeigt sich, dass durch Schalten der Zwischenschritte der akustische Nachteil verhindert werden kann. Dieser akustische Nachteil wird offensichtlich durch das abrupte Umschalten des elektrischen Felds verursacht. Durch Zwischenschalten der Zwischenschritte, durch die sanfte Kommutierung, wird das elektrische Feld nicht mehr abrupt umgeschaltet. Dieser Zwischenschritt ist üblicherweise in seiner Zeit abhängig von der aktuellen Drehzahl des Elektromotors.

In Ausgestaltung sind als Signalpegel ein PWM-Signal, ein hochohmiges TriState-Signal und ein statisches Low-Signal vorgesehen. In diesem Fall verhindert der Zwischenschritt, dass eine Phase abrupt auf TriState geschaltet wird. Anstelle dessen wird für einen kurzen Zeitraum bspw. auf die Hälfte des PWM-Signalpegels als Zwischensignalpegel geschaltet und auf diese Weise werden die akustischen Eigenschaften verbessert. Anstelle des PWM-Signals kann auch ein entsprechendes Gleichsignal vorgesehen sein.

Es bietet sich an, dass der Zwischenschritt einen Signalpegel aufweist, der der Hälfte des Signalpegels des PWM-Signals entspricht.

In Ausgestaltung werden Hall-Sensoren zum Auslösen der Kommutierung eingesetzt. Diese Hall-Sensoren liefern Informationen zur Lage des Stators und stellen Signale bereit, die die Kommutierungen triggern.

Zusätzlich kann bei dem Verfahren eine Halbschrittkommutierung eingesetzt werden. Dies wird zur Verbesserung der Haptik eingesetzt, wobei der Motor auf eine Position zwischen den Hall-Mustern bzw. Pattern gestellt wird und auf diese Weise die Auflösung der Ansteuerung verdoppelt wird.

Um Leistungseinbrüche bei hohen Drehzahlen zu verhindern, wird die sanfte Kommutierung ab einer bestimmten Drehzahl vollständig abgestaltet, d. h. das Verfahren wird in Abhängigkeit der Drehzahl des Elektromotors durchgeführt.

Die erfindungsgemäße Einrichtung zum Ansteuern eines Elektromotors dient insbesondere zur Durchführung eines vorstehend beschriebenen Verfahrens. Diese wird zur Ansteuerung eines Elektromotors mit mindestens einer Phase eingesetzt, wobei die Einrichtung zur Ansteuerung des Motors unterschiedliche Signalpegel zur Verfügung stellt. Zusätzlich stellt die Einrichtung einen Zwischensignalpegel oder auch mehrere Zwischensignalpegel bereit, der bzw. die Zwischenschritten zwischen den Signalpegeln zugeordnet ist bzw. sind.

Die Einrichtung dient insbesondere zur Ansteuerung eines bürstenlosen Gleichstrommotors.

Als Signalpegel werden bspw. ein PWM-Signal, ein hochohmiges TriState-Signal und ein statisches Low-Signal bereitgestellt.

In Tabelle 1 ist eine Kommutierungstabelle dargestellt, wobei ein rechtsgängiger Vollschrittbetrieb angezeigt wird, bei dem lediglich die Pegel PWM-Signal (P), hochohmiges TriState-Signal (T) und statischer Low-Pegel (L) eingenommen werden. Dabei geben die Hall-Sensoren (H3, H2 und H1) Signale, die zur Triggerung der Kommutierungen verwendet werden. Die einzelnen Phasen des Motors, in diesem Beispiel drei Phasen, sind mit W, V und U bezeichnet.

**Tabelle 1:**

| | | | | | | | | |
|---|---|---|---|---|---|---|---|---|
| **Rechts Voll Schritt** | | **H3** | **H2** | **H1** | **Index** | **W** | **V** | **U** |
| | 0 | 1 | 0 | 1 | 5 | L | T | P |
| | 1 | 0 | 0 | 1 | 1 | L | P | T |
| | 2 | 0 | 1 | 1 | 3 | T | P | L |
| | 3 | 0 | 1 | 0 | 2 | P | T | L |
| | 4 | 1 | 1 | 0 | 6 | P | L | T |
| | 5 | 1 | 0 | 0 | 4 | T | L | P |

Im Gegensatz zu Tabelle 1 ist in Tabelle 2 die sanfte

Kommutierung mit einem sog. Softschritt (S) dargestellt, dessen Pegel 50 % des PWM-Pegels entspricht.

**Tabelle 2:**

| | | | | | | | | |
|---|---|---|---|---|---|---|---|---|
| **Rechts Soft Schritt** | | **H3** | **H2** | **H1** | **Index** | **W** | **V** | **U** |
| | 0 | 1 | 0 | 1 | 5 | L | S | P |
| | 1 | 0 | 0 | 1 | 1 | L | P | S |
| | 2 | 0 | 1 | 1 | 3 | S | P | L |
| | 3 | 0 | 1 | 0 | 2 | P | S | L |
| | 4 | 1 | 1 | 0 | 6 | P | L | S |
| | 5 | 1 | 0 | 0 | 4 | S | L | P |

In Tabelle 3 ist ein Vollschrittbetrieb bei einem linksdrehenden Motor dargestellt.

**Tabelle 3:**

| | | | | | | | | |
|---|---|---|---|---|---|---|---|---|
| **Links Voll Schritt** | | **H3** | **H2** | **H1** | **Index** | **W** | **V** | **U** |
| | 0 | 1 | 0 | 1 | 5 | P | T | L |
| | 1 | 0 | 0 | 1 | 1 | P | L | T |
| | 2 | 0 | 1 | 1 | 3 | T | L | P |
| | 3 | 0 | 1 | 0 | 2 | L | T | P |
| | 4 | 1 | 1 | 0 | 6 | L | P | T |
| | 5 | 1 | 0 | 0 | 4 | T | P | L |

In Tabelle 4 ist ein linksdrehender Betrieb mit Softschritt dargestellt.

**Tabelle 4:**

| | | | | | | | | |
|---|---|---|---|---|---|---|---|---|
| **Links Soft Schritt** | | **H3** | **H2** | **H1** | **Index** | **W** | **V** | **U** |
| | 0 | 1 | 0 | 1 | 5 | P | S | L |
| | 1 | 0 | 0 | 1 | 1 | P | L | S |
| | 2 | 0 | 1 | 1 | 3 | S | L | P |
| | 3 | 0 | 1 | 0 | 2 | L | S | P |
| | 4 | 1 | 1 | 0 | 6 | L | P | S |
| | 5 | 1 | 0 | 0 | 4 | S | P | L |

Die Tabellen verdeutlichen, dass das Feld im Softschrittbetrieb nicht mehr abrupt anhand der üblichen Schrittabelle umgeschaltet, sondern über einen Zwischenschritt (Soft Step bzw. Softschritt) geschaltet wird, was auch als sanfte Kommutierung bezeichnet wird.

Da die sanfte Kommutierung nur die Akustik verbessert, kann zur Verbesserung der Haptik auch noch eine Halbschrittkom-mutierung eingesetzt werden. Mit dieser wird der Motor auf eine Position zwischen den Hall-Pattern gestellt und somit die Auflösung der Ansteuerung verdoppelt.

Tabelle 5 verdeutlicht einen rechtsläufigen Halbschrittbetrieb.

**Tabelle 5:**

| | | | | | | | | |
|---|---|---|---|---|---|---|---|---|
| **Rechts Halb Schritt** | | **H3** | **H2** | **H1** | **Index** | **W** | **V** | **U** |
| | 0 | 1 | 0 | 1 | 5 | L | L | |
| | 1 | 0 | 0 | 1 | 1 | L | P | P |
| | 2 | 0 | 1 | 1 | 3 | L | P | L |
| | 3 | 0 | 1 | 0 | 2 | P | P | L |
| | 4 | 1 | 1 | 0 | 6 | P | L | L |
| | 5 | 1 | 0 | 0 | 4 | P | L | P |
| | 6 | 0 | 0 | 0 | 0 | T | T | T |
| | 6 | 1 | 1 | 1 | 7 | T | T | T |

Tabelle 6 zeigt einen linksdrehenden Halbschrittbetrieb.

**Tabelle 6:**

| | | | | | | | | |
|---|---|---|---|---|---|---|---|---|
| **Links Halb Schritt** | | **H3** | **H2** | **H1** | **Index** | **W** | **V** | **U** |
| | 0 | 1 | 0 | 1 | 5 | P | L | L |
| | 1 | 0 | 0 | 1 | 1 | P | L | P |
| | 2 | 0 | 1 | 1 | 3 | L | L | P |
| | 3 | 0 | 1 | 0 | 2 | L | P | P |
| | 4 | 1 | 1 | 0 | 6 | L | P | L |
| | 5 | 1 | 0 | 0 | 4 | P | P | L |
| | 6 | 0 | 0 | 0 | 0 | T | T | T |
| | 6 | 1 | 1 | 1 | 7 | T | T | T |

P=PWM
T = TriState Hochohmig
L = Low Statisch Low
S = Soft (50 %)

Das erfindungsgemäße Computerprogramm umfasst Programmcodemittel, um ein Verfahren zum Betreiben einer Hilfskraftlenkung der vorstehend beschriebenen Art durchzuführen, wenn das Computerprogramm auf einem Mikroprozessor eines Computers, insbesondere in einem Steuergerät, ausgeführt wird.

Dieses Computerprogramm kann auf einem computerlesbaren Datenträger, wie bspw. einer Diskette, CD, DVD, Festplatte, einem USB-Memory-Stick oder ähnlichem, oder einem Internetserver als Computerprogrammprodukt gespeichert sein. Vor dort kann das Computerprogramm in ein Speicherelement des Steuergeräts übertragen werden.

Weitere Vorteile und Ausgestaltungen der Erfindungen ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im folgenden unter Bezugnahme auf die Zeichnung ausführlich beschrieben.
- Figur 1: zeigt in schematischer Darstellung eine Ausführungsform der erfindungsgemäßen Einrichtung.
- Figur 2: zeigt Signalpegelverläufe während einer Kommutierung.

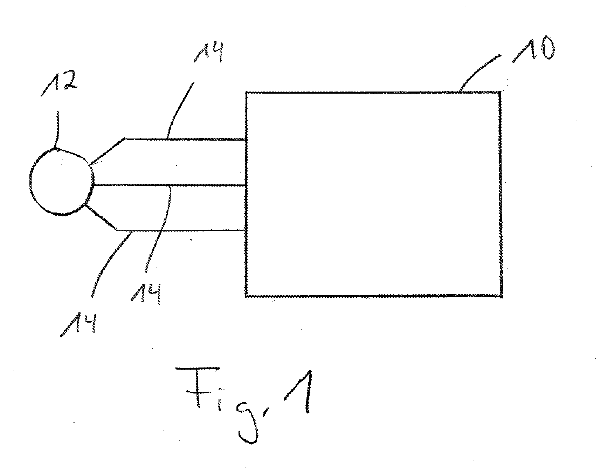

In Figur 1 ist eine Einrichtung, insgesamt mit der Bezugsziffer 10 bezeichnet, zur Ansteuerung eines Elektromotors 12 dargestellt. Der Elektromotor 12 ist dabei ein dreiphasiger bürstenloser Gleichstrommotor, der über drei Signalleitungen 14 zur Ansteuerung der einzelnen Phasen mit der Einrichtung 10 verbunden ist. Die Einrichtung 10 stellt zur Ansteuerung ein PWM-Signal, ein hochohmiges TriState-Signal und ein statisches Low-Signal (Signal mit niedrigem bzw. Null-Pegel) sowie einen Zwischensignalpegel bereit. Mit diesen Signalpegeln und dem Zwischensignalpegel wird der Motor 12 angesteuert.

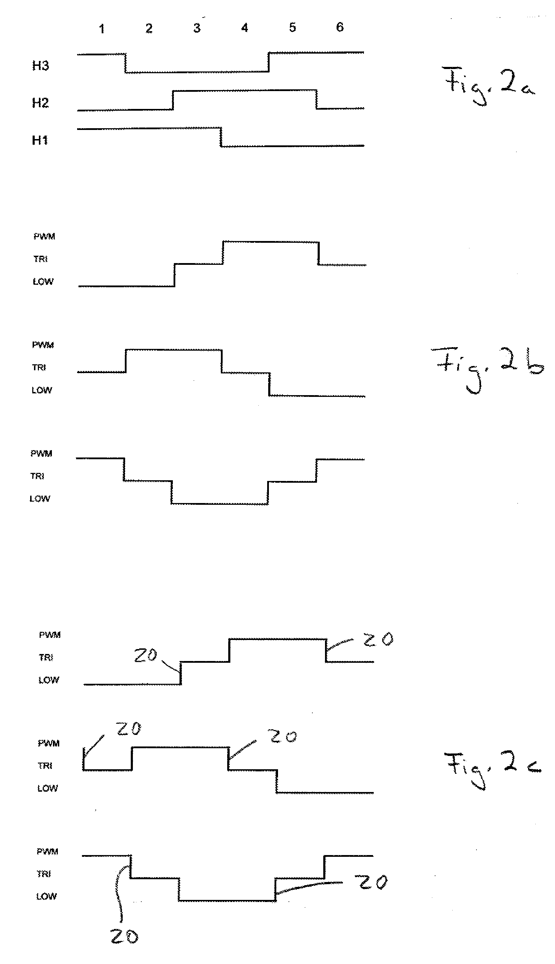

Figur 2a zeigt Verläufe der Signale von drei Hall-Sensoren (H3, H2, H1) während eines Umlaufs eines Elektromotors. In Figur 2b sind entsprechend die Verläufe der Ansteuersignale für die drei Phasen des Elektromotors dargestellt, wobei keine sanfte Kommutierung vorgesehen ist. Im Vergleich dazu sind in Figur 2c die Verläufe der Ansteuersignale für den Elektromotor dargestellt, wobei Übergänge 20 mit sanfter Kommutierung realisiert sind.

## Patentansprüche

1. Verfahren zur Ansteuerung eines Elektromotors (12) mit mindestens einer Phase, bei dem die mindestens eine Phase kommutiert mit unterschiedlichen Signalpegeln angesteuert wird,
**dadurch gekennzeichnet, dass** bei der Ansteuerung zwischen den einzelnen Signalpegeln Zwischenschritte, denen Zwischensignalpegel zugeordnet sind, geschaltet werden.

2. Verfahren nach Anspruch 1, bei dem als Signalpegel, ein PWM-Signal, ein hochohmiges TriState-Signal und ein statisches Low-Signal vorgesehen sind.

3. Verfahren nach Anspruch 2, bei dem den Zwischenschritten ein Zwischensignalpegel zugeordnet ist, der der Hälfte des Signalpegels des PWM-Signals entspricht.

4. Verfahren nach einem der Ansprüche 1 bis 3, bei dem Hall-Sensoren (H1, H2, H3) zum Auslösen der Kommutierungen eingesetzt werden.

5. Verfahren nach einem der Ansprüche 1 bis 4, bei dem eine Halb-Schritt-Kommutierung eingesetzt wird.

6. Verfahren nach einem der Ansprüche 1 bis 5, das in Abhängigkeit einer Drehzahl des Elektromotors (12) durchgeführt wird.

7. Einrichtung zur Ansteuerung eines Elektromotors, insbesondere zur Durchführung eines Verfahrens nach einem der Ansprüche 1 bis 6, die zur Ansteuerung eines Elektromotors mit mindestens einer Phase dient, wobei die Einrichtung (10) zur Ansteuerung des Elektromotors (12) unterschiedliche Signalpegel zur Verfügung stellt,
**dadurch gekennzeichnet, dass** die Einrichtung (10) zusätzlich einen Zwischensignalpegel bereitstellt, der Zwischenschritten zwischen den Signalpegeln zugeordnet ist.

8. Einrichtung nach Anspruch 7, die zur Ansteuerung eines bürstenlosen Gleichstrommotors dient.

9. Einrichtung nach Anspruch 7 oder 8, die als Signalpegel ein PWM-Signal, ein hochohmiges TriState-Signal und ein statisches Low-Signal bereitstellt.

10. Computerprogramm mit Programmcodemitteln, um ein Verfahren zum Ansteuern eines Elektromotors (12) nach einem der Ansprüche 1 bis 6 durchzuführen, wenn das Computerprogramm auf einem Mikroprozessor eines Computers, insbesondere in einer Einrichtung (10) nach einem der Ansprüche 7 bis 9, ausgeführt wird.

11. Computerprogrammprodukt mit Programmcodemitteln, die auf einem computerlesbaren Datenträger gespeichert sind, um ein Verfahren zum Ansteuern eines Elektromotors (12) nach einem der Ansprüche 1 bis 6 durchzuführen, wenn das Computerprogramm auf einem Mikroprozessor eines Computers, insbesondere in einer Einrichtung (10) nach einem der Ansprüche 7 bis 9, ausgeführt wird.
